# EUROPEAN PATENT APPLICATION

(11) **EP 3 002 522 A2**
(43) Date of publication of application: **06.04.2016**
(21) Application number: 15187319.7
(22) Date of filing: 29.09.2015
(51) Int. Cl.: F24F 1/20, F24F 11/00, F25B 49/02

(54) **OUTDOOR UNIT**

(30) Priority: 30.09.2014 JP 2014201905
(71) Applicant: MITSUBISHI HEAVY INDUSTRIES, LTD., Tokyo 108-8215 (JP)
(72) Inventor: HAYAKAWA, Tetsuya, TOKYO, 108-8215 (JP); SUMIYA, Atsuyuki, TOKYO, 108-8215 (JP); KASAI, Tatsuya, TOKYO, 108-8215 (JP)
(74) Representative: Intès, Didier Gérard André

(57) **Abstract**

An outdoor unit (14) for an air conditioner (10) having at least one of a cooling function and a dehumidifying function, the outdoor unit (14) includes a fan motor (22) configured to send outdoor air; a compressor (23) configured to compress a refrigerant; and a controller (24) including a fan motor control unit (52) configured to control the fan motor (22) and a compressor control unit (54) configured to control the compressor (23), and when a limit condition that a command value of the fan motor control unit (52) is a first threshold number of rotations or more, a number of rotations of the fan motor (22) has continuously been a number of rotations lower by a first setting number of rotations than a number of rotations in the command value for a predetermined time, and a target number of rotations of the compressor (23) is a limited number of rotations or more is satisfied, the compressor control unit (54) reduces a number of rotations of the compressor (23) and rotates the compressor (23) at the limited number of rotations.

## Description

### Field

The present invention relates to an outdoor unit for an air conditioner.

### Background

An air conditioner includes, for example, an indoor unit, an outdoor unit, and an operation unit. The outdoor unit is a mechanism to cool a refrigerant when the indoor unit cools a room, and includes a heat exchanger, a compressor, and a fan motor which is a motor having a fan. The heat exchanger in the outdoor unit functions as a condenser and radiates the heat to outside the room. The compressor in the outdoor unit generates heat during driving. The fan motor in the outdoor unit generates heat at the motor during driving. For this reason, the outdoor unit generates heat and the temperature easily rises.
Thus, malfunctions may occur in each part due to the temperature rise. Therefore, the outdoor unit has various functions to suppress the temperature rise.

For example, Patent Literature 1 discloses an air conditioner device in which a control device reduces the operational capability of an outdoor device when a heat generating body of a fan-drive system which drives an outdoor fan is a predetermined temperature or more during the operation of the outdoor device and the indoor device.

Patent Literature 2 discloses an air conditioner including a fan motor abnormality detection unit to detect an abnormality of a fan motor, a fan motor reducing flag generation unit to generate a fan motor reducing flag for reducing the number of rotations of the fan motor when the abnormality of the fan motor is detected, a fan motor control unit to control the fan motor and reduce the number of rotations of the fan motor when the fan motor reducing flag is generated, and a compressor control unit to control the number of rotations of the compressor during normal operation and control the number of rotations of the compressor according to the reduced number of rotations of the fan motor by the fan motor control unit when the fan motor reducing flag is generated.

### Citation List

### Patent Literature

Patent Literature 1: Japanese Laid-open Patent Publication No. 11-218352
Patent Literature 2: Japanese Laid-open Patent Publication No. 2010-175194

### Summary

### Technical Problem

As a device described in Patent Literature 1, with a method for suppressing the temperature rise by reducing, based on the detection result by a temperature detection unit such as a thermistor, the operational capability of the outdoor device and a heat generation amount of the outdoor device when the temperature becomes high, the operation is executed after the temperature actually rises and it takes time for the temperature to be reduced after the control to reduce the temperature is executed. Thus, the temperature further rises during the time and the load on the devices is generated. Furthermore, the device described in Patent Literature 2 is required to limit the operation current during normal operation, and the performance of the outdoor unit is reduced.

The present invention is to solve the above problems, and an object of the present invention is to provide an outdoor unit which can suppress the reduction in the performance of the outdoor unit while protecting a power device.

### Solution to Problem

According to an aspect of the present invention, an outdoor unit for an air conditioner having at least one of a cooling function and a dehumidifying function comprises: a fan motor configured to send outdoor air; a compressor configured to compress a refrigerant; and a controller including a fan motor control unit configured to control the fan motor and a compressor control unit configured to control the compressor. When a limit condition that a command value of the fan motor control unit is a first threshold number of rotations or more, a number of rotations of the fan motor has continuously been a number of rotations lower by a first setting number of rotations than a number of rotations in the command value for a predetermined time, and a target number of rotations of the compressor is a limited number of rotations or more is satisfied, the compressor control unit reduces a number of rotations of the compressor and rotates the compressor at the limited number of rotations.

With the above configuration, an outdoor unit can perform the control to reduce the number of rotations of a compressor when the difference between the number of rotations of a fan motor and a command value satisfies a limit condition. It is possible to suppress the reduction in the performance of the outdoor unit while protecting the power device.

Advantageously, in the outdoor unit, when any of that the command value of the fan motor control unit is a second threshold number of rotations, which is lower than the first threshold number of rotations, or less, that the target number of rotations of the compressor is less than a limited number of rotations, that the compressor is stopped, and that the number of rotations of the fan motor has continuously been a number of rotations lower by a second setting number of rotations than the number of rotations in the command value for a predetermined time is satisfied, the compressor control unit cancels control to rotate the compressor at the limited number of rotations, and the second setting number of rotations is a number of rotations lower than the first setting number of rotations.

With the above configuration, the outdoor unit can improve the operational capability while protecting the power device.

Advantageously, in the outdoor unit, the limit condition includes that a number of rotations in the command value of the fan motor control unit is 90% or more of a maximum number of rotations, the number of rotations of the fan motor has continuously been 88% or less of the maximum number of rotations for a predetermined time, and the target number of rotations of the compressor is the limited number of rotations or more.

With the above configuration, the outdoor unit can perform the control to reduce the number of rotations of the compressor when the difference between ratios of the number of rotations of the fan motor and the command value satisfies the limit condition. It is possible to suppress the reduction in the performance of the outdoor unit while protecting the power device.

According to another aspect of the present invention, an outdoor unit for an air conditioner having at least one of a cooling function and a dehumidifying function comprises: a fan motor configured to send outdoor air; a compressor configured to compress a refrigerant; and a controller including a fan motor control unit configured to control the fan motor and a compressor control unit configured to control the compressor. When a limit condition that a number of rotations in a command value of the fan motor control unit is 90% or more of a maximum number of rotations, a number of rotations of the fan motor has continuously been 88% or less of a maximum number of rotations for a predetermined time, and a target number of rotations of the compressor is a limited number of rotations or more is satisfied, the compressor control unit reduces a number of rotations of the compressor and rotates the compressor at the limited number of rotations.

With the above configuration, the outdoor unit can perform the control to reduce the number of rotations of the compressor when the difference between ratios of the number of rotations of the fan motor and the command value satisfies the limit condition. It is possible to suppress the reduction in the performance of the outdoor unit while protecting the power device.

Advantageously, in the outdoor unit, when any of cancellation conditions that the command value of the fan motor control unit is 80% or less of the maximum number of rotations, the target number of rotations of the compressor is less than the limited number of rotations, the compressor is stopped, and the number of rotations of the fan motor has continuously been 89% or more of the maximum number of rotations for a predetermined time is satisfied, the compressor control unit cancels control to rotate the compressor at the limited number of rotations.

With the above configuration, the outdoor unit can improve the operational capability while protecting the power device.

Advantageously, in the outdoor unit, the fan motor includes a fan motor side control unit configured to control operation of the fan motor, the fan motor control unit includes an overload protection unit configured to execute a protection function to reduce the operation of the fan motor when a load on the fan motor becomes high, and the limit condition includes that the protection function by the overload protection unit has been executed.

With the above configuration, the outdoor unit can perform the control to reduce the number of rotations of the compressor according to the operation of the overload protection unit. It is possible to suppress the reduction in the performance of the outdoor unit while protecting the power device.

According to still another aspect of the present invention, an outdoor unit for an air conditioner having at least one of a cooling function and a dehumidifying function comprises: a fan motor configured to send outdoor air; a compressor configured to compress a refrigerant; and a controller including a fan motor control unit configured to control the fan motor and a compressor control unit configured to control the compressor. The fan motor includes a fan motor side control unit configured to control the fan motor, the fan motor control unit includes an overload protection unit configured to execute, when a load on the fan motor becomes high, a protection function to reduce the operation of the fan motor, and when a limit condition that the protection function by the overload protection unit has been executed is satisfied, the compressor control unit reduces a number of rotations of the compressor and rotates the compressor at the limited number of rotations.

With the above configuration, the outdoor unit can perform the control to reduce the number of rotations of the compressor according to the operation of the overload protection unit. It is possible to suppress the reduction in the performance of the outdoor unit while protecting the power device.

Advantageously, in the outdoor unit, when the protection function by the overload protection unit is canceled, the compressor control unit rotates the compressor at the limited number of rotations.

With the above configuration, the outdoor unit can improve the operational capability while protecting the power device.

Advantageously, the outdoor unit further comprises an outdoor temperature sensor configured to detect an outdoor temperature. The limit condition includes, in addition to other conditions, that an outdoor temperature detected by the outdoor temperature sensor is a threshold temperature or more.

With the above configuration, the outdoor unit can determine with high precision whether the state needs to limit the number of rotations of the compressor.

Advantageously, in the outdoor unit, the limit condition includes, in addition to other conditions, that an indoor unit operates in at least one of a cooling operation and a dehumidifying operation.

With the above configuration, the outdoor unit can determine with high precision whether the state needs to limit the number of rotations of the compressor. Advantageous Effects of Invention

According to the present invention, when a limit condition is satisfied, by performing the control to reduce the number of rotations of a compressor, it is possible to suppress the reduction in the performance of an outdoor unit while protecting a power device.

### Brief Description of Drawings

FIG. 1 is a block diagram illustrating a schematic configuration of an air conditioner including an outdoor unit of the present embodiment.
FIG. 2 is a table to illustrate an example of rotation control of a fan motor.
FIG. 3 is a graph illustrating relation between thermistor temperatures and overcurrent control values.
FIG. 4 is a graph illustrating relation between the reduced number of rotations and reduced capability, and the overcurrent control value.
FIG. 5 is a flowchart illustrating an example of control operation of the outdoor unit.
FIG. 6 is a flowchart illustrating an example of control operation of the outdoor unit.
FIG. 7 is a flowchart illustrating an example of control operation of the outdoor unit.
FIG. 8 is a flowchart illustrating an example of control operation of the outdoor unit.
FIG. 9 is a flowchart illustrating an example of control operation of the outdoor unit.
FIG. 10 is a flowchart illustrating an example of control operation of the outdoor unit.
FIG. 11 is a flowchart illustrating an example of control operation of the outdoor unit.
FIG. 12 is a flowchart illustrating an example of control operation of the outdoor unit.

### Description of Embodiments

Hereinafter, an embodiment according to the present invention will be described in detail with reference to the drawings. Note that, the invention is not limited by the embodiment. Furthermore, component elements in the following embodiment include a device which can be replaced or is easily replaced by a person skilled in the art, or is the substantially same.

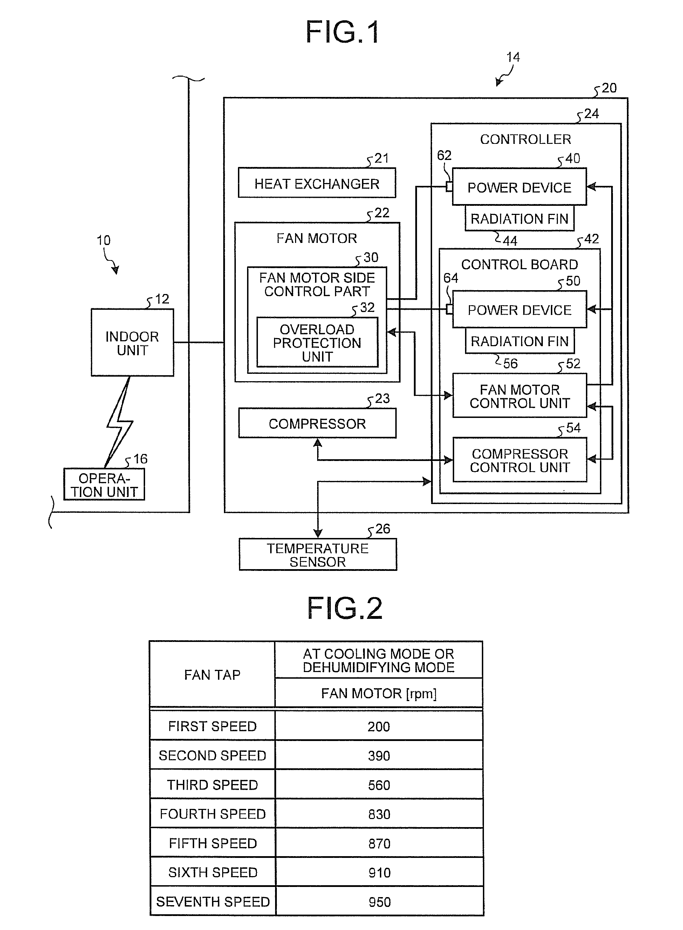

FIG. 1 is a block diagram illustrating a schematic configuration of an air conditioner including an outdoor unit of the present embodiment. An air conditioner 10 illustrated in FIG. 1 includes an indoor unit 12, an outdoor unit 14, and an operation unit 16. The indoor unit 12 is basically installed inside a room, provides temperature-and-humidity-conditioned air to inside the room to cool, heat, and dehumidify the room. The outdoor unit 14 is basically installed outside the room and connected to the indoor unit 12. The outdoor unit 14 implements a cooling function, a heating function, and a dehumidifying function of the indoor unit 12 by cooling or heating a refrigerant (heat medium) and circulating the refrigerant (heat medium) between the outdoor unit 14 and the indoor unit 12. The operation unit 16 is a device to which a user inputs the operation. The operation unit 16 is a mobile terminal or a terminal installed on a wall or the like. The operation unit 16 is a device which can input a mode, such as cooling, drying, dehumidifying, or heating, and various operations, such as a preset temperature, air volume, air direction, a start timer, or a stop timer. The operation unit 16 transmits the input operation to the indoor unit 12 and the outdoor unit 14 by a wireless or wired communication.

Next, each part of the outdoor unit 14 will be described. The outdoor unit 14 includes, as illustrated in FIG. 1, a casing 20, a heat exchanger 21, a fan motor 22, a compressor 23, a controller 24, and a temperature sensor 26. Note that, the outdoor unit 14 further includes, in addition to the above configuration, the parts which the outdoor unit generally includes, such as an expansion valve and a four-way valve which regulates the direction of the refrigerant flow.

The casing 20 is a box to contain the parts of the outdoor unit 14. A ventilation from which the outdoor air inflows is formed on the casing 20 and the outdoor air flows into the inside, whereby the casing 20 can exhaust the air from the inside to the outside.

The heat exchanger 21 performs heat-exchange between the air and the refrigerant. The heat exchanger 21 has, for example, a number of corrugated fins therearound and includes a refrigerant pipe through which the refrigerant flows. The heat exchanger 21 implements heat-exchange between the outdoor air around the refrigerant pipe and the refrigerant.

The fan motor 22 is a rotation device having a fan and promotes the exchange of the air between the inside and the outside of the casing 20 by rotating. For example, the fan motor 22 includes a fan motor side control unit 30. The fan motor side control unit 30 controls the operation of the fan motor 22 based on the control value input from the controller 24, various types of information, and the state of the fan motor 22. Furthermore, the fan motor side control unit 30 will be described later. The compressor 23 converts a low temperature and low pressure gas refrigerant into a high temperature and high pressure gas refrigerant and exhausts the converted gas.

The controller 24 controls the operation of the parts of the outdoor unit 14. The controller 24 includes a power device 40 and a control board 42. The power device 40 includes an element for power control, such as a rectifier diode, a power transistor (a power MOSFET, an insulated gate bipolar transistor (IGBT)), a thyristor, a gate turn-off thyristor (GTO), or a triac. The power device 40 controls the power provided to the fan motor 22 and the compressor 23. The power device 40 includes a radiation fin 44. The power device 40 transfers the generated heat to the radiation fin 44 and radiates the heat.

The control board 42 includes a power device 50, a fan motor control unit 52, and a compressor control unit 54. The power device 50 has an element for power control and controls the power provided to the parts of the control board 42. The power device 50 includes a radiation fin 56. The power device 50 transfers the generated heat to the radiation fin 56 and radiates the heat.

The fan motor control unit 52 calculates the necessary number of rotations for the fan motor based on the various operation conditions and transmits the calculated number of rotations of the motor to the fan motor 22 as a command value. FIG. 2 is a table to illustrate an example of rotation control of a fan motor. Here, as illustrated in FIG. 2, the fan motor 22 can change the speed of the number of rotations to a multi-stage by shifting a fan tap. In the present embodiment, the fan motor 22 can change speeds to seven stages as follows: 200 rpm at a first speed, 390 rpm at a second speed, 560 rpm at a third speed, 830 rpm at a fourth speed, 870 rpm at a fifth speed, 910 rpm at a sixth speed, and 950 rpm at a seventh speed. The fan motor control unit 52 determines that the operation is performed at either of the first to seventh speed or stopped and transmits the determined stage of speeds to the fan motor 22 as a command value.

The compressor control unit 54 controls the operation of the compressor 23. More specifically, the compressor control unit 54 controls the number of rotations of the compressor 23 and the operation performed to the refrigerant at the compressor 23. The control operation of the compressor control unit 54 will be described later.

Furthermore, the controller 24 includes a thermistor 62 which detects the temperature of the power device 40 and a thermistor 64 which detects the temperature of the power device 62. The thermistors 62 and 64 transmit the detected results to the fan motor side control unit 30. Note that, the controller 24 is only required to detect the temperatures of the power devices 40 and 50 and a temperature detection element other than thermistor may be used.

The fan motor side control unit 30 includes an overload protection unit 32. The overload protection unit 32 is a circuit and controls the rotation of the fan motor 22 based on the current provided to the fan motor 22 or the temperatures of the power devices 40 and 50 detected by the thermistors 62 and 64. More specifically, when determining that the load is large, the overload protection unit 32 reduces the current provided to the fan motor 22 and executes overload protection operation to reduce the load on the fan motor 22. The overload protection unit 32 executes the overload protection operation when, for example, the current flowing to the fan motor 22 exceeds an overcurrent setting value, which is 2A in the present embodiment. The overload protection unit 32 executes the overload protection operation when, for example, the temperatures detected by thermistors 62 and 64 exceed 80°C. As the overload protection operation of the overload protection unit 32, the operation in which the number of rotations of the fan motor 22 is reduced to 100 rpm or by 10% to the maximum capability of the number of rotations of the fan motor 22, is exemplified. Note that the numerical value is an example. Furthermore, the overload protection unit 32 cancels the overload protection operation when the current of the fan motor 22 becomes the overcurrent setting value or less, or when the temperature detected by thermistor becomes 80°C or less.

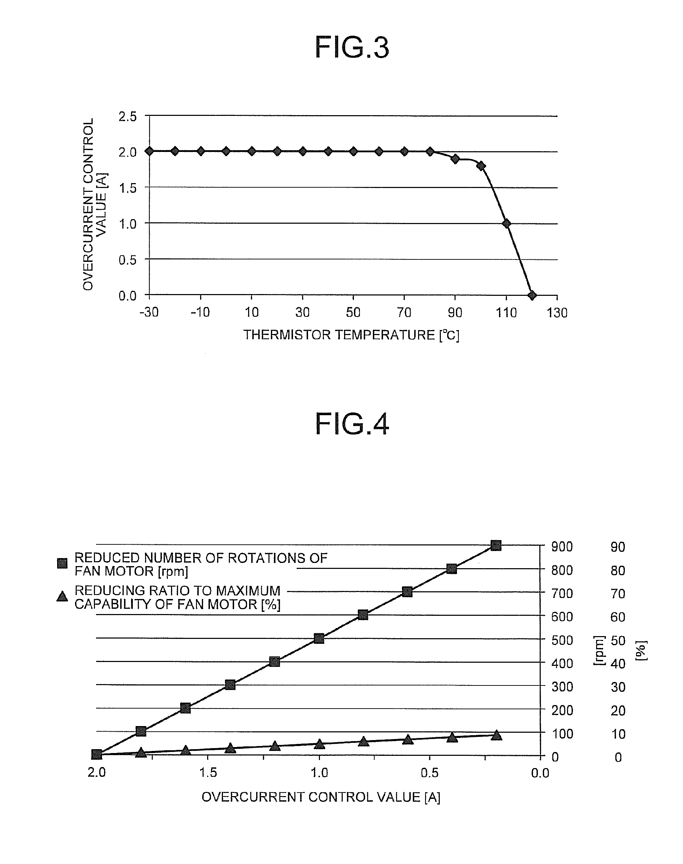

Moreover, the overload protection unit 32 may reduce the overcurrent control value based on the temperature detected by thermistor. FIG. 3 is a graph illustrating relation between thermistor temperatures and overcurrent control values. As illustrated in FIG. 3, the overload protection unit 32 may reduce the overcurrent control value, that is, the reference current value to execute the overload protection operation, as thermistor temperature becomes higher. FIG. 4 is a graph illustrating the relation between the reduced number of rotations and reduced capability (reducing ratio to the maximum capability), and the overcurrent control value. When the overload protection unit 32 is controlled in the relation illustrated in FIG. 3, the overcurrent limit value is reduced and the number of rotations of the fan motor is reduced as illustrated in FIG. 4. Whereby, the capability (the number of rotations) of the fan motor 22 is reduced compared with the maximum capability of the fan motor.

The temperature sensor 26 is disposed outside the casing 20 and detects the temperature of the atmosphere where the outdoor unit 14 is installed. Note that, the temperature sensor 26 is preferably provided at an opening which is an air intake hole of the casing 20. The temperature sensor 26 transmits the information of the detected outdoor air (outdoor temperature) to the controller 24.

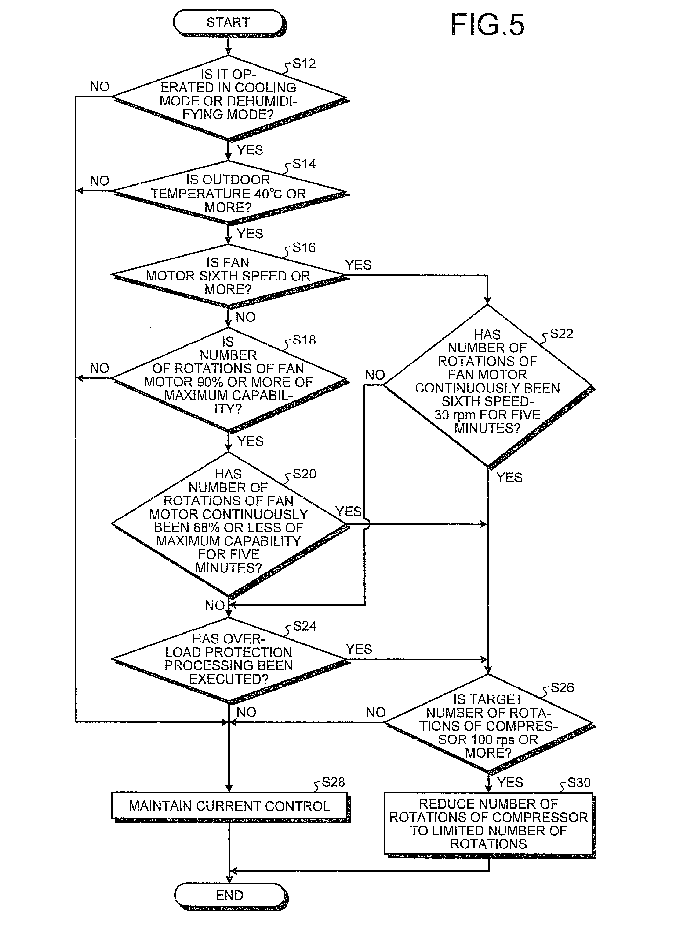

Next, with reference to FIG. 5, an example of control operation by the compressor control unit 54 of the controller 24 will be described. FIG. 5 is a flowchart illustrating an example of the control operation of the compressor control unit. FIG. 5 illustrates the operation in which it is determined whether processing to limit the performance (the number of rotations) of the compressor is to be executed, and the processing is executed based on the determination result.

The compressor control unit 54 determines whether the indoor unit 12 operates in a cooling mode (cooling operation) or a dehumidifying mode (dehumidifying operation) (step S12). When determining that the indoor unit 12 does not operate in the cooling operation or the dehumidifying mode (No in step S12), the compressor control unit 54 proceeds to step S28.

When determining that the indoor unit 12 operates in the cooling mode or the dehumidifying mode (Yes in step S12), the compressor control unit 54 determines whether the outdoor temperature is 40°C or more (step S14). The compressor control unit 54 detects, based on the temperature detected by the temperature sensor 26, the outdoor temperature, that is, the temperature of the atmosphere where the outdoor unit 14 is installed. Here, the reference temperature of 40°C as the outdoor temperature in the present embodiment is an example, and the temperature can be set to an arbitrary temperature. The reference temperature is the temperature from which it can be determined that the problem caused by the heat generation of the power devices 40 and 50 may occur. When determining that the outdoor temperature is less than 40°C (No in step S14), the compressor control unit 54 proceeds to step S28.

When determining that the outdoor temperature is 40°C or more (Yes in step S14), the compressor control unit 54 determines whether the fan motor is the sixth speed (first threshold number of rotations) or more (step S16). More specifically, the compressor control unit 54 determines whether the command value transmitted from the fan motor control unit 52 to the fan motor 22 is the sixth speed (first threshold number of rotations) or more (the sixth speed or the seventh speed in the present embodiment). Here, the sixth speed as the stage of speeds set to the multi-stage by the fan tap is used as a reference in the first threshold number of rotations of the present embodiment, but the fifth speed or the seventh speed may be used. Furthermore, the stage of speeds set to the multi-stage by the fan tap is used as a reference in the first threshold number of rotations of the present embodiment, the number of rotations (the setting number of rotations) [rpm] may be used as a reference.

When determining that the fan motor 22 is not the six speed or more (No in step S16), that is, when the command value is the fifth speed or less, the compressor control unit 54 determines whether the number of rotations of the fan motor 22 is 90% or more of the maximum capability (maximum number of rotations) (step S18). That is, more specifically, the compressor control unit 54 acquires the information from the fan motor control unit 52, and determines whether the number of rotations of the fan motor 22 in the command value transmitted from the fan motor control unit 52 to the fan motor 22 is the value of 90% or more of the maximum capability (maximum number of rotations). When determining that the number of rotations of the fan motor 22 is not 90% or more of the maximum capability (No in step S18), the compressor control unit 54 proceeds to step S28.

When determining that the number of rotations of the fan motor 22 is 90% or more of the maximum capability (maximum number of rotations) (Yes in step S18), the compressor control unit 54 determines whether the fan motor 22 has been continuously operated at 88% or less of the maximum capability for five minutes (step S20). That is, the compressor control unit 54 acquires the information from the fan motor side control unit 30, detects the number of rotations of the fan motor 22 rotating by the control of the fan motor side control unit 30, and determines whether the number of rotations of the fan motor 22 has been continuously operated at 88% or less of the maximum capability of the fan motor 22 for five minutes. When determining that the number of rotations of the fan motor 22 has not been continuously operated at 88% or less of the maximum capability for five minutes (No in step S20), the compressor control unit 54 proceeds to step S24. On the other hand, when determining that the number of rotations of the fan motor 22 has been continuously operated at 88% or less of the maximum capability for five minutes (Yes in step S20), the compressor control unit 54 proceeds to step S26.

Furthermore, when determining that the fan motor 22 is the sixth speed (first threshold number of rotations) or more (Yes in step S16), the compressor control unit 54 determines whether the number of rotations of the fan motor 22 has been continuously operated at (the number of rotations at the sixth speed - 30 rpm (first threshold number of rotations)) for five minutes (predetermined time) (step S22). That is, the compressor control unit 54 acquires the information from the fan motor side control unit 30, detects the number of rotations of the fan motor 22 rotating by the control of the fan motor side control unit 30, and determines whether the number of rotations of the fan motor 22 has been continuously operated at the number of rotations at the sixth speed - 30 rpm for five minutes. When determining that the fan motor 22 has not been continuously operated at the number of rotations at the sixth speed (number of rotations in the command value) - 30 rpm or less for five minutes (No in step S22), the compressor control unit 54 proceeds to step S24. On the other hand, when determining that the fan motor 22 has been continuously operated at the number of rotations at the sixth speed - 30 rpm for five minutes (Yes in step S22), the compressor control unit 54 proceeds to step S26.

When determining No in step S20 or step S22, the compressor control unit 54 determines whether the overload protection processing has been executed (step S24). That is, the compressor control unit 54 determines whether the overload protection processing has been executed by the overload protection unit 32. When determining that the overload protection processing has been executed (Yes in step S24), the compressor control unit 54 proceeds to step S26. On the other hand, when determining that the overload protection processing has not been executed (No in step S24), the compressor control unit 54 proceeds to step S28.

When determining Yes in step S20, step S22, or step S24, the compressor control unit 54 determines whether the target number of rotations of the compressor 23 is 100 rps (limited number of rotations) or more (step S26). That is, the compressor control unit 54 determines whether the compressor 23 is operated at the high number of rotations or a high output. The limited number of rotations of 100 rps in the present embodiment is an example. The reference number of rotations (the limited number of rotations) can be set arbitrarily. Note that, the limited number of rotations is preferably set to the value from 60% or more to 90% or less of the maximum number of rotations of the compressor.

When determining that the target number of rotations of the compressor 23 is less than 100 rps (No in step S26), or when determining No in step S12, step S14, step S18, or step S24, the compressor control unit 54 maintains the current control (step S28) and terminates the present processing.

When determining that the target number of rotations of the compressor 23 is 100 rps or more (Yes in step S26), the compressor control unit 54 reduces the number of rotations of the compressor 23 to the limited number of rotations (100 rps) (step S30) and terminates the present processing.

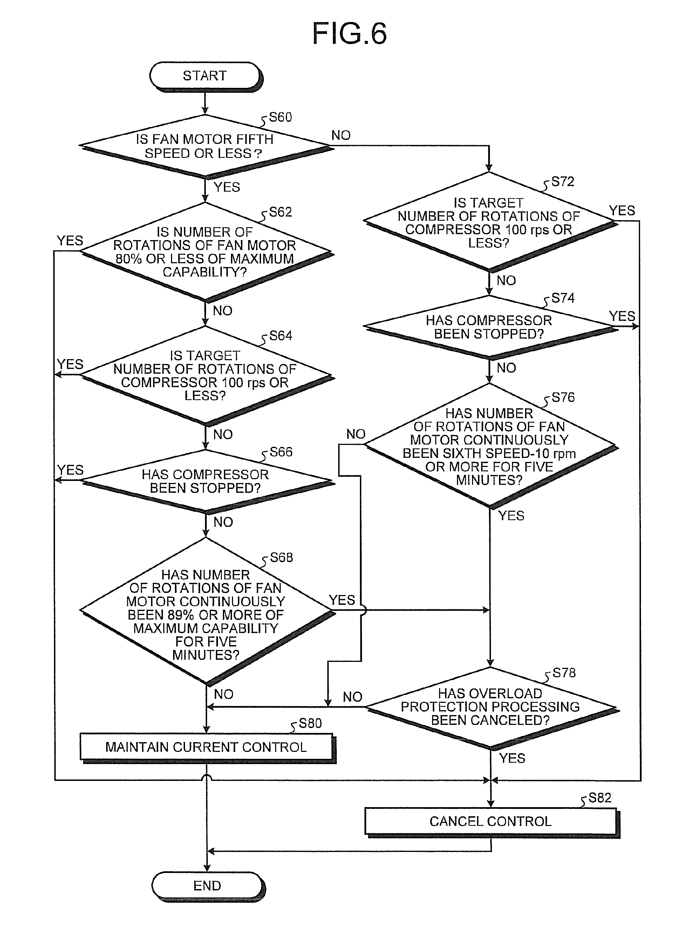

Next, with reference to FIG. 6, an example of the control operation by the compressor control unit 54 of the controller 24 will be described. FIG. 6 is a flowchart illustrating an example of the control operation of the compressor control unit. FIG. 6 illustrates the operation, which is executed during the processing to limit the performance (the number of rotations) of the compressor is being executed, in which it is determined whether the processing to limit the number of rotations is to be canceled, and the processing is executed based on the determination result.

The compressor control unit 54 determines whether the fan motor 22 is the fifth speed (the second threshold number of rotations) or less (step S60). More specifically, the compressor control unit 54 determines whether the command value transmitted from the fan motor control unit 52 to the fan motor 22 is in the fifth speed or less. Furthermore, the stage of speeds set to the multi-stage by the fan tap is used as a reference in the present embodiment, the number of rotations (the setting number of rotations) [rpm] may be used as a reference. The the second threshold number of rotations is only required to be a stage of rotations lower than the stage used as the reference in step S16.

When determining that the fan motor 22 is the fifth speed or less (Yes in step S60), the compressor control unit 54 determines whether the number of rotations of the fan motor 22 is 80% or less of the maximum capability (maximum number of rotations) (step S62). That is, more specifically, the compressor control unit 54 acquires the information from the fan motor control unit 52, and determines whether the number of rotations of the fan motor 22 in the command value transmitted from the fan motor control unit 52 to the fan motor 22 is 80% or less of the maximum capability. When determining that the number of rotations of the fan motor 22 is 80% or less of the maximum capability (Yes in step S62), the compressor control unit 54 proceeds to step S82.

When determining that the number of rotations of the fan motor 22 is not 80% or less (No in step S62), the compressor control unit 54 determines whether the target number of rotations of the compressor 23 is 100 rps (limited number of rotations) or less (step 64). Here, 100 rps is the same the number of rotations as the limited number of rotations used as the reference in step S26. When determining that the target number of rotations of the compressor is 100 rps or less (Yes in step S64), the compressor control unit 54 proceeds to step S82.

When determining that the target number of rotations of the compressor 23 is not 100 rps or less (No in step S64), the compressor control unit 54 determines whether the compressor 23 has been stopped (step S66). When determining that the compressor 23 has been stopped (Yes in step S66), the compressor control unit 54 proceeds to step S82.

When determining that the compressor 23 has not been stopped (No in step S66), the compressor control unit 54 determines whether the number of rotations of the fan motor 22 has been continuously operated at 89% or more of the maximum capability for five minutes (step S68). That is, the compressor control unit 54 acquires the information from the fan motor side control unit 30, detects the number of rotations of the fan motor 22 rotating by the control of the fan motor side control unit 30, and determines whether the number of rotations of the fan motor 22 has been continuously operated at 89% or more of the maximum capability of the fan motor 22 for five minutes. When determining that the fan motor has been continuously operated at 89% or more of the maximum capability for five minutes (Yes in step S68), the compressor control unit 54 proceeds to step S78. On the other hand, when determining that the fan motor has not been continuously operated at 89% or more of the maximum capability for five minutes (No in step S68), the compressor control unit 54 proceeds to step S80.

When determining that the fan motor 22 is not the fifth speed or less (No in step S60), the compressor control unit 54 determines, similarly to step S64, whether the target number of rotations of the compressor 23 is 100 rps or less (step 72). When determining that the target number of rotations of the compressor is 100 rps or less (Yes in step S74), the compressor control unit 54 proceeds to step S82.

When determining that the target number of rotations of the compressor is not 100 rps or less (No in step S72), the compressor control unit 54 determines, similarly to step S66, whether the compressor 23 has been stopped (step S74). When determining that the compressor 23 has been stopped (Yes in step S74), the compressor control unit 54 proceeds to step S82.

When determining that the compressor 23 has not been stopped (No in step S74), the compressor control unit 54 determines whether the number of rotations of the fan motor has been continuously operated at (the sixth speed - 10 rpm) or more for five minutes (predetermined time) (step S76). That is, the compressor control unit 54 acquires the information from the fan motor side control unit 30, detects the number of rotations of the fan motor 22 rotating by the control of the fan motor side control unit 30, and determines whether the number of rotations of the fan motor 22 has been continuously operated at (the sixth speed (number of rotations in the command value) - 10 rpm (the second threshold number of rotations)) or more for five minutes. When determining that the number of rotations of the fan motor 22 has been continuously operated at (the sixth speed - 10 rpm or more) for five minutes (Yes in step S76), the compressor control unit 54 proceeds to step S78. On the other hand, when determining that the number of rotations of the fan motor 22 has not been continuously operated at (the sixth speed -10 rps) or more for five minutes (No in step S76), the compressor control unit 54 proceeds to step S80.

When determining Yes in step S68 or step S76, the compressor control unit 54 determines whether the overload protection processing has been canceled (step S78). That is, the compressor control unit 54 determines whether the overload protection processing has been canceled by the overload protection unit 32. When determining that the overload protection processing has not been executed (No in step S78), the compressor control unit 54 proceeds to step S80. On the other hand, when the overload protection processing has been canceled (Yes in step S78), the compressor control unit 54 proceeds to step S82.

When determining No in steps S68, S76, or S78, the compressor control unit 54 maintains the current limit (step S80) and terminates the present processing. That is, the number of rotations of the compressor 23 is maintained to the limited number of rotations or less. When determining Yes in steps S62, S64, S66, S72, S74, or S78, the compressor control unit 54 cancel the control (step S82) and terminates the present processing. That is, the limit of the number of rotations of the compressor 23 is canceled.

By performing the determination to perform the processing illustrated in FIGS. 5 and 6, the outdoor unit 14 appropriately detects the states of the fan motor 22 and the compressor 23 and can control the operation of the compressor 23. That is, when at least the number of rotations of the fan motor (the output ratio to the maximum output), the difference between the command value of the fan motor 22 and the actual number of rotations (the difference of the output ratio), and the number of rotations of the compressor 23 satisfy the condition, by reducing the number of rotations of the compressor 23, it is possible to appropriately suppress the heat generation of the power device of the outdoor unit 14.

Furthermore, before or/and after the overload protection unit 32 executes the overload protection operation, the operation illustrated in FIG. 5 is executed, the number of rotations of the compressor 23 is reduced, and the heat generation of the power device is suppressed. Whereby, the overload protection unit 32 does not need to perform a high precision protection. Thus, it is possible to perform the control with high precision without detecting the temperature with high precision, and it is possible to perform the control with high precision while the performance of thermistor is reduced. Moreover, in the case that the number of rotations of the fan motor 22 is reduced by the overload protection operation by the overload protection unit 32, and the difference from the number of rotations in the command value from the fan motor control unit 52 is caused, by reducing the rotation of the compressor 23, the temperature of the power device can be quickly reduced, and it is possible to prevent the difference between the actual number of rotations of the fan motor 22 and the number of rotations in the command value from increasing. Furthermore, the capability of the compressor 23 during normal operation does not need to be limited, and the capability of the outdoor unit 14 is highly maintained. As described above, the outdoor unit 14 can perform the stable operation while maintaining the performance. Moreover, as illustrated in FIG. 6, by canceling the limitation of the number of rotations of the compressor 23 based on the various conditions, it is possible to quickly return the outdoor unit 14 to the normal operation state. Thus, it is possible to improve the operational capability while protecting the power device.

Furthermore, in the processing illustrated in FIG. 5, by determining whether the indoor unit 12 operates in the cooling mode or the dehumidifying mode, it is possible to suitably determine whether the operation state easily raises the temperature of the power device and set the reference to reduce the performance of the compressor. Since the above effect can be obtained, the outdoor unit 14 preferably determines whether the air conditioner 10 operates in the cooling mode or the dehumidifying mode, but does not need to perform the determination.

Furthermore, in the processing illustrated in FIG. 5, by determining whether the outdoor temperature is high, it is possible to suitably determine whether the environment easily raises the temperature of the power device and set the reference to reduce the performance of the compressor 23. Since the above effect can be obtained, the outdoor unit 14 preferably determines whether the outdoor temperature is high, but does not need to perform the determination.

Moreover, in the above embodiment, the case where the fan motor 22 is one has been described. However, the outdoor unit 14 may include a plurality of fan motors 22. When the outdoor unit 14 includes a plurality of fan motors 22 and at least one of the motors satisfies the above conditions, the number of rotations of compressor 22 is preferably reduced.

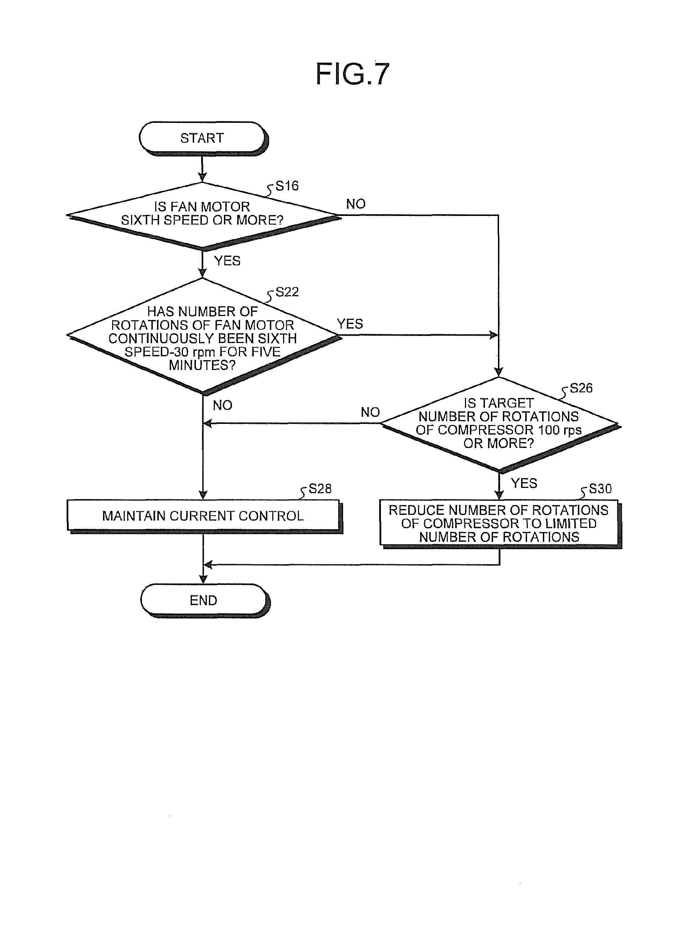

Here, in the processing of FIGS. 5 and 6, it is determined whether the number of rotations of compressor 22 is to be limited or to be canceled using a plurality of references. However, a part of the references of FIGS. 5 and 6 may be used. Hereinafter, with reference to FIGS. 7 to 12, another processing operation will be described. Each of FIGS. 7 to 12 is a flowchart illustrating an example of control operation of the outdoor unit. The processing in each step of the processing operation illustrated in FIGS. 7 to 12 is basically similar to the processing of FIG. 5 or 6. Therefore, the same step number is assigned to each processing, the detailed description thereof is omitted, and the procedures of the processing will be described.

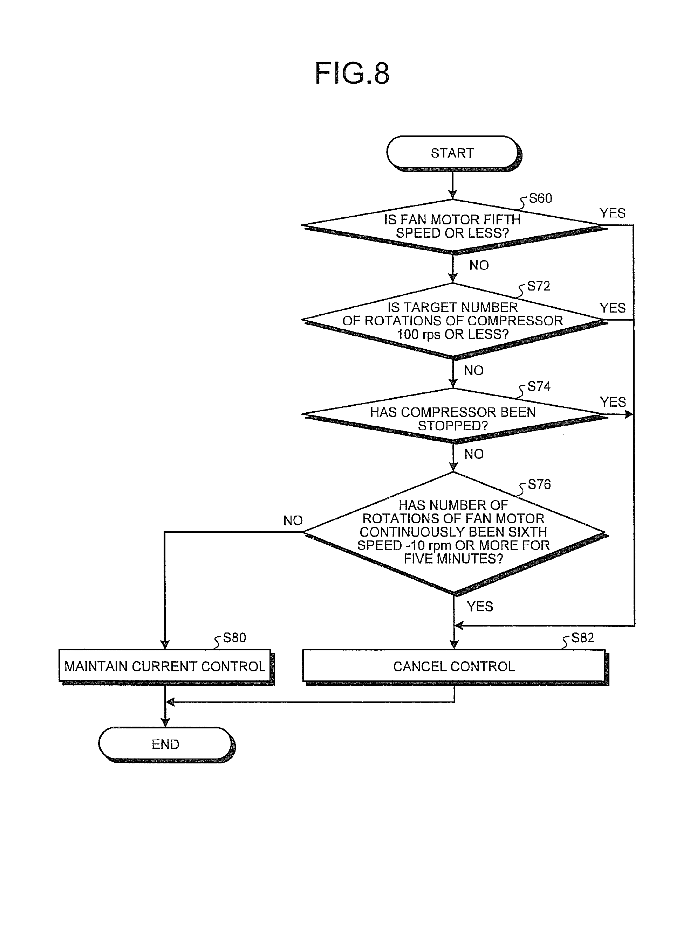

With reference to FIGS. 7 and 8, another example will be described. FIG. 7 illustrates another example of the operation in which it is determined whether processing to limit the performance (the number of rotations) of the compressor is to be executed, and the processing is executed based on the determination result.

The compressor control unit 54 determines whether the fan motor 22 is the sixth speed or more (step S16). When determining that the fan motor 22 is not the sixth speed or more (No in step S16), that is, when determining that the command value is the fifth speed or less, the compressor control unit 54 proceeds to step S26.

Furthermore, when determining that the fan motor 22 is the sixth speed or more (Yes in step S16), the compressor control unit 54 determines whether the number of rotations of the fan motor 22 has been continuously operated at (the number of rotations at the sixth speed - 30 rpm) for five minutes (step S22). When determining that the fan motor 22 has not been continuously operated at the number of rotations at the sixth speed - 30 rpm or less for five minutes (No in step S22), the compressor control unit 54 proceeds to step S28. On the other hand, when determining that the fan motor 22 has been continuously operated at the rotation speed at the sixth speed - 30 rpm for five minutes (Yes in step S22), the compressor control unit 54 proceeds to step S26.

When determining Yes in step S22, the compressor control unit 54 determines whether the target number of rotations of the compressor is 100 rps or more (step S26). When determining that the target number of rotations of the compressor is less than 100 rps (No in step S26), or when determining No in step S22, the compressor control unit 54 maintains the current control (step S28) and terminates the present processing.

When determining that the target number of rotations of the compressor 23 is 100 rps or more (Yes in step S26), the compressor control unit 54 reduces the number of rotations of the compressor 23 to the limited number of rotations (100 rps) (step S30) and terminates the present processing.

The processing operation of FIG. 8 illustrates another example of the operation, which is executed during the processing to limit the performance (the number of rotations) of the compressor 23 is being executed, in which it is determined whether the processing to limit the number of rotations is to be canceled, and the processing is executed based on the determination result.

The compressor control unit 54 determines whether the fan motor 22 is the fifth speed or less (step S60). When determining that the fan motor 22 is the fifth speed or less (Yes in step S60), the compressor control unit 54 proceeds to step S82.

When determining that the fan motor 22 is not the fifth speed or less (No in step S60), the compressor control unit 54 determines whether the target number of rotations of the compressor 23 is 100 rps or less (step 72). When determining that the target number of rotations of the compressor 23 is 100 rps or less (Yes in step S64), the compressor control unit 54 proceeds to step S82.

When determining that the target number of rotations of the compressor 23 is not 100 rps or less (No in step S72), the compressor control unit 54 determines whether the compressor 23 has been stopped (step S74). When determining that the compressor 23 has been stopped (Yes in step S74), the compressor control unit 54 proceeds to step S82.

When determining that the compressor 23 has not been stopped (No in step S74), the compressor control unit 54 determines whether the number of rotations of the fan motor 22 has been continuously operated at (the sixth speed - 10 rpm) or more for five minutes (step S76). When determining that the number of rotations of the fan motor 22 has been continuously operated at (the sixth speed - 10 rpm) or more for five minutes (Yes in step S76), the compressor control unit 54 proceeds to step S82. On the other hand, when determining that the number of rotations of the fan motor 22 has not been continuously operated at (the sixth speed - 10 rpm) or more for five minutes (No in step S76), the compressor control unit 54 proceeds to step S80.

When determining No in step S76, the compressor control unit 54 maintains the current limit (step S80) and terminates the present processing. When determining Yes in steps S60, S72, or S74, the compressor control unit 54 cancels the control (step S82) and terminates the present processing.

As illustrated in FIGS. 7 and 8, by performing the determination based on the numerical value of the number of rotations, the outdoor unit 14 can suitably detect the states of the fan motor 22 and the compressor 23, and control the operation of the compressor 23. Thus, it is possible to suppress the heat generation of the power device of the outdoor unit 14 and perform the stable operation while the performance is maintained.

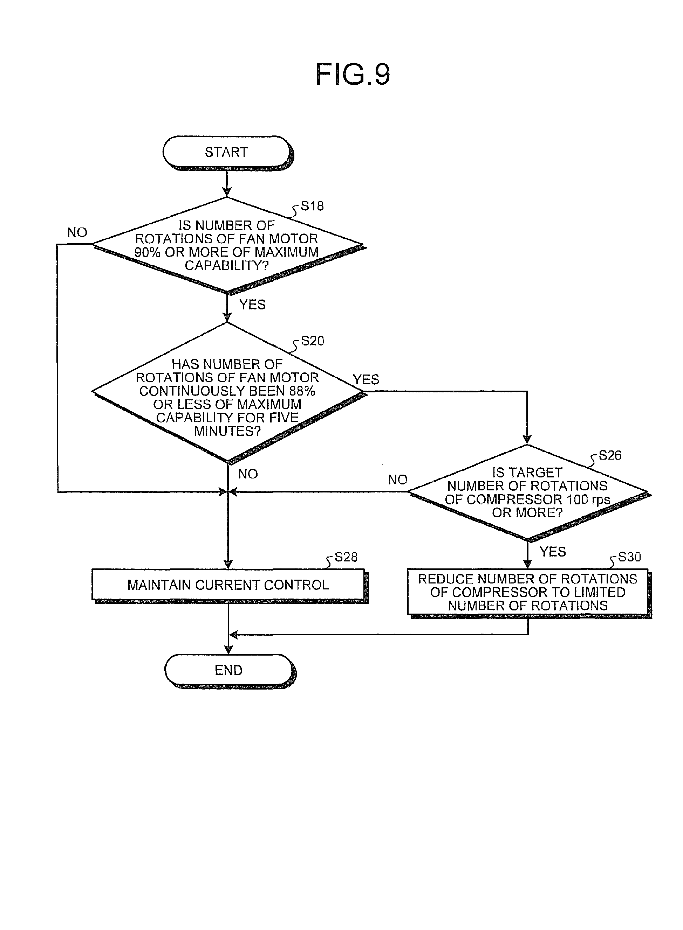

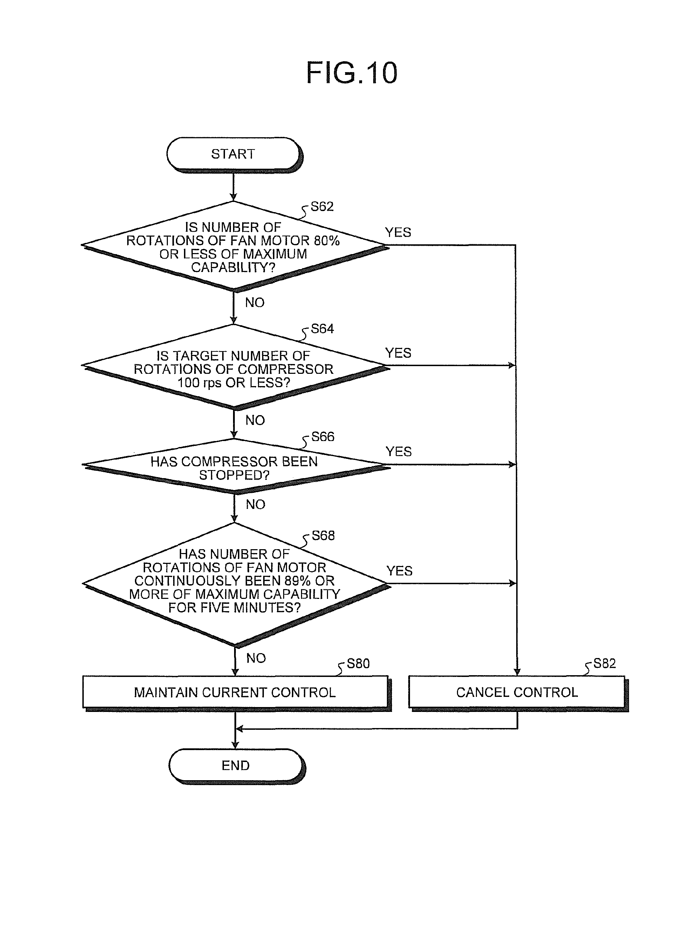

With reference to FIGS. 9 and 10, another example will be described. FIG. 9 illustrates the operation in which it is determined whether processing to limit the performance (the number of rotations) of the compressor 23 is to be executed, and the processing is executed based on the determination result.

The compressor control unit 54 determines whether the number of rotations of the fan motor 22 is 90% or more of the maximum capability (step S18). When determining that the number of rotations of the fan motor 22 is not 90% or more of the maximum capability (No in step S18), the compressor control unit 54 proceeds to step S28.

When determining that the number of rotations of the fan motor 22 is 90% or more of the maximum capability (Yes in step S18), the compressor control unit 54 determines whether the number of rotations of the fan motor 22 has been continuously operated at 88% or less of the maximum capability for five minutes (step S20). That is, the compressor control unit 54 acquires the information from the fan motor side control unit 30, detects the number of rotations of the fan motor 22 rotating by the control of the fan motor side control unit 30, and determines whether the number of rotations of the fan motor 22 has been continuously operated at 88% or less of the maximum capability for five minutes. When determining that the number of rotations of the fan motor 22 has not been continuously operated at 88% or less of the maximum capability for five minutes (No in step S20), the compressor control unit 54 proceeds to step S28. On the other hand, when determining that the number of rotations of the fan motor 22 has been continuously operated at 88% or less of the maximum capability for five minutes (Yes in step S20), the compressor control unit 54 proceeds to step S26.

When determining Yes in step S20, the compressor control unit 54 determines whether the target number of rotations of the compressor 23 is 100 rps or more (step S26). When determining that the target number of rotations of the compressor 23 is less than 100 rps (No in step S26), or when determining No in step S20, the compressor control unit 54 maintains the current control (step S28) and terminates the present processing.

When determining that the target number of rotations of the compressor 23 is 100 rps or more (Yes in step S26), the compressor control unit 54 reduces the number of rotations of the compressor 23 to the limited number of rotations (100 rps) (step S30) and terminates the present processing.

Next, FIG. 10 illustrates the operation, which is executed during the processing to limit the performance (the number of rotations) of the compressor 23 is being executed, in which it is determined whether the processing to limit the number of rotations is to be canceled, and the processing is executed based on the determination result.

The compressor control unit 54 determines whether the number of rotations of the fan motor 22 is 80% or less of the maximum capability (step S62). When determining that the number of rotations of the fan motor 22 is 80% or less of the maximum capability (Yes in step S62), the compressor control unit 54 proceeds to step S82.

When determining that the number of rotations of the fan motor 22 is not 80% or less (No in step S62), the compressor control unit 54 determines whether the target number of rotations of the compressor 23 is 100 rps or less (step 64). When determining that the target number of rotations of the compressor 23 is 100 rps or less (Yes in step S64), the compressor control unit 54 proceeds to step S82.

When determining that the target number of rotations of the compressor 23 is not 100 rps or less (No in step S64), the compressor control unit 54 determines whether the compressor 23 has been stopped (step S66). When determining that the compressor 23 has been stopped (Yes in step S66), the compressor control unit 54 proceeds to step S82.

When determining that the compressor 23 has not been stopped (No in step S66), the compressor control unit 54 determines whether the number of rotations of the fan motor 22 has been continuously operated at 89% or more of the maximum capability for five minutes (step S68). When determining that the number of rotations of the fan motor 22 has been continuously operated at 89% or more of the maximum capability for five minutes (Yes in step S68), the compressor control unit 54 proceeds to step S82. On the other hand, when determining that the number of rotations of the fan motor 22 has not been continuously operated at 89% or more of the maximum capability for five minutes (No in step S68), the compressor control unit 54 proceeds to step S80.

When determining No in step S68, the compressor control unit 54 maintains the current limit (step S80) and terminates the present processing. When determining Yes in steps S62, S64, S66, or S68, the compressor control unit 54 cancels the control (step S82) and terminates the present processing. That is, the limit of the number of rotations of the compressor 23 is canceled.

As illustrated in FIGS. 9 and 10, by performing the determination based on the ratio of the number of rotations to the maximum capability, the outdoor unit 14 can suitably detect the states of the fan motor 22 and the compressor 23, and control the operation of the compressor 23. Thus, it is possible to suppress the heat generation of the power device of the outdoor unit 14 and perform the stable operation while the performance is maintained.

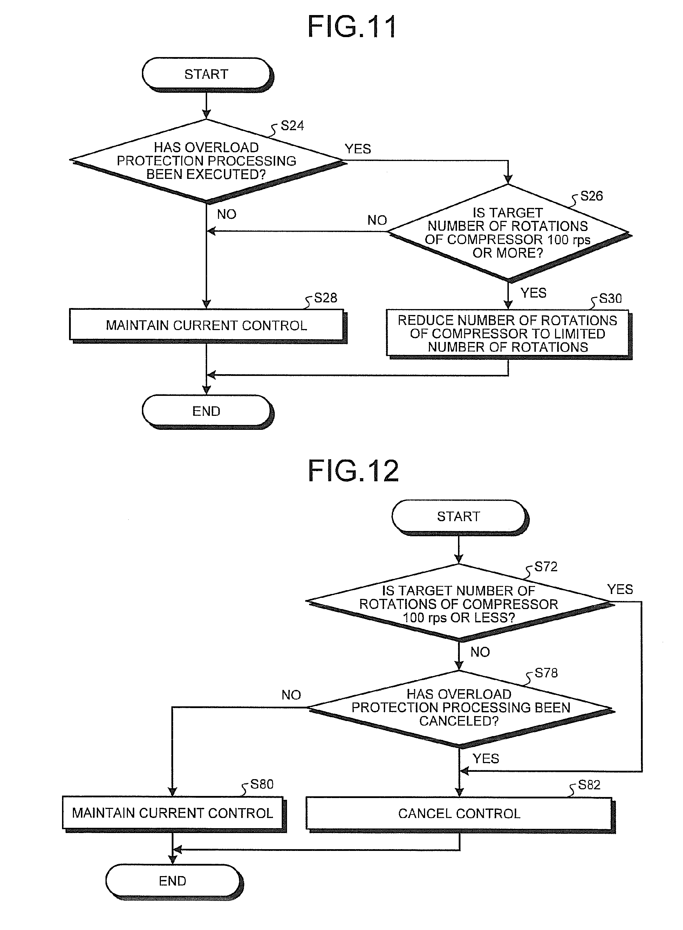

FIG. 11 illustrates the operation in which it is determined whether processing to limit the performance (the number of rotations) of the compressor 23 is to be executed, and the processing is executed based on the determination result.

The compressor control unit 54 determines whether the overload protection processing has been executed (step S24). That is, the compressor control unit 54 determines whether the overload protection function is executed by the overload protection unit 32. When determining that the overload protection processing has been executed (Yes in step S24), the compressor control unit 54 proceeds to step S26. On the other hand, when determining that the overload protection processing has not been executed (No in step S24), the compressor control unit 54 proceeds to step S28.

When determining Yes in step S24, the compressor control unit 54 determines whether the target number of rotations of the compressor 23 is 100 rps or more (step S26). When determining that the target number of rotations of the compressor 23 is less than 100 rps (No in step S26), or when determining No in step S24, the compressor control unit 54 maintains the current control (step S28) and terminates the present processing.

When determining that the target number of rotations of the compressor 23 is 100 rps or more (Yes in step S26), the compressor control unit 54 reduces the number of rotations of the compressor 23 to the limited number of rotations (100 rps) (step S30) and terminates the present processing.

Next, FIG. 12 illustrates another example of the operation, which is executed during the processing to limit the performance (the number of rotations) of the compressor is being executed, in which it is determined whether the processing to limit the number of rotations of the compressor 23 is to be canceled, and the processing is executed based on the determination result.

The compressor control unit 54 determines whether the target number of rotations of the compressor 23 is 100 rps or less (step 72). When determining that the target number of rotations of the compressor 23 is 100 rps or less (Yes in step S72), the compressor control unit 54 proceeds to step S82.

When determining that the target number of rotations of the compressor 23 is not 100 rps or less (No in step S72), the compressor control unit 54 determines whether the overload protection processing has been canceled (step S78). That is, the compressor control unit 54 determines whether the overload protection processing has been canceled by the overload protection unit 32. When determining that the overload protection processing has not been executed (No in step S78), the compressor control unit 54 proceeds to step S80. On the other hand, when the overload protection processing has been canceled (Yes in step S78), the compressor control unit 54 proceeds to step S82.

When determining No in step S78, the compressor control unit 54 maintains the current limit (step S80) and terminates the present processing. When determining Yes in step S78, the compressor control unit 54 cancel the control (step S82) and terminates the present processing. That is, the limit of the number of rotations of the compressor 23 is canceled.

As illustrated in FIGS. 11 and 12, by determining the overload protection operation, the outdoor unit 14 can suitably detect the states of the fan motor 22 and the compressor 23, and control the operation of the compressor 23. Thus, it is possible to suppress the heat generation of the power device of the outdoor unit 14 and perform the stable operation while the performance is maintained. Reference Signs List
- 10: air conditioner
- 12: indoor unit
- 14: outdoor unit
- 16: operation unit
- 20: casing
- 21: heat exchanger
- 22: fan motor
- 23: compressor
- 24: controller
- 26: temperature sensor
- 30: fan motor side control unit
- 32: overload protection unit
- 40,: 50 power device
- 42: control board
- 44,: 56 radiation fin
- 52: fan motor control unit
- 54: compressor control unit
- 62,: 64 thermistor

## Claims

1. An outdoor unit (14) for an air conditioner (10) having at least one of a cooling function and a dehumidifying function, the outdoor unit (14) comprising:
a fan motor (22) configured to send outdoor air;
a compressor (23) configured to compress a refrigerant; and
a controller (24) including a fan motor control unit (52) configured to control the fan motor (22) and a compressor control unit (54) configured to control the compressor (23), wherein
when a limit condition that a command value of the fan motor control unit (52) is a first threshold number of rotations or more, a number of rotations of the fan motor (22) has continuously been a number of rotations lower by a first setting number of rotations than a number of rotations in the command value for a predetermined time, and a target number of rotations of the compressor (23) is a limited number of rotations or more is satisfied, the compressor control unit (54) reduces a number of rotations of the compressor (23) and rotates the compressor (23) at the limited number of rotations.

2. The outdoor unit (14) according to claim 1, wherein
when any of that the command value of the fan motor control unit (52) is a second threshold number of rotations, which is lower than the first threshold number of rotations, or less, that the target number of rotations of the compressor (23) is less than a limited number of rotations, that the compressor (23) is stopped, and that the number of rotations of the fan motor (22) has continuously been a number of rotations lower by a second setting number of rotations than the number of rotations in the command value for a predetermined time is satisfied, the compressor control unit (54) cancels control to rotate the compressor (23) at the limited number of rotations, and
the second setting number of rotations is a number of rotations lower than the first setting number of rotations.

3. The outdoor unit (14) according to claim 1 or 2, wherein the limit condition includes that a number of rotations in the command value of the fan motor control unit (52) is 90% or more of a maximum number of rotations, the number of rotations of the fan motor (22) has continuously been 88% or less of the maximum number of rotations for a predetermined time, and the target number of rotations of the compressor (23) is the limited number of rotations or more.

4. An outdoor unit (14) for an air conditioner (10) having at least one of a cooling function and a dehumidifying function, the outdoor unit (14) comprising:
a fan motor (22) configured to send outdoor air;
a compressor (23) configured to compress a refrigerant; and
a controller (24) including a fan motor control unit (52) configured to control the fan motor (22) and a compressor control unit (54) configured to control the compressor (23), wherein
when a limit condition that a number of rotations in a command value of the fan motor control unit (52) is 90% or more of a maximum number of rotations, a number of rotations of the fan motor (22) has continuously been 88% or less of a maximum number of rotations for a predetermined time, and a target number of rotations of the compressor (23) is a limited number of rotations or more is satisfied, the compressor control unit (54) reduces a number of rotations of the compressor (23) and rotates the compressor (23) at the limited number of rotations.

5. The outdoor unit (14) according to claim 3 or 4, wherein when any of cancellation conditions that the command value of the fan motor control unit (52) is 80% or less of the maximum number of rotations, the target number of rotations of the compressor (23) is less than the limited number of rotations, the compressor (23) is stopped, and the number of rotations of the fan motor (22) has continuously been 89% or more of the maximum number of rotations for a predetermined time is satisfied, the compressor control unit (54) cancels control to rotate the compressor (23) at the limited number of rotations.

6. The outdoor unit (14) according to any one of claims 1 to 5, wherein
the fan motor (22) includes a fan motor side control unit (30) configured to control operation of the fan motor (22) ,
the fan motor control unit (52) includes an overload protection unit configured to execute a protection function to reduce the operation of the fan motor (22) when a load on the fan motor (22) becomes high, and
the limit condition includes that the protection function by the overload protection unit has been executed.

7. An outdoor unit (14) for an air conditioner (10) having at least one of a cooling function and a dehumidifying function, the outdoor unit (14) comprising:
a fan motor (22) configured to send outdoor air;
a compressor (23) configured to compress a refrigerant; and
a controller (24) including a fan motor control unit (52) configured to control the fan motor (22) and a compressor control unit (54) configured to control the compressor (23), wherein
the fan motor (22) includes a fan motor side control unit (30) configured to control the fan motor (22),
the fan motor control unit (52) includes an overload protection unit configured to execute, when a load on the fan motor (22) becomes high, a protection function to reduce the operation of the fan motor (22), and
when a limit condition that the protection function by the overload protection unit has been executed is satisfied, the compressor control unit (54) reduces a number of rotations of the compressor (23) and rotates the compressor (23) at the limited number of rotations.

8. The outdoor unit (14) according to claim 6 or 7, wherein when the protection function by the overload protection unit is canceled, the compressor control unit (54) rotates the compressor (23) at the limited number of rotations.

9. The outdoor unit (14) according to any one of claims 1 to 8 further comprising:
an outdoor temperature sensor (26) configured to detect an outdoor temperature, wherein
the limit condition includes, in addition to other conditions, that an outdoor temperature detected by the outdoor temperature sensor (26) is a threshold temperature or more.

10. The outdoor unit (14) according to any one of claims 1 to 9, wherein the limit condition includes, in addition to other conditions, that an indoor unit (12) operates in at least one of a cooling operation and a dehumidifying operation.
